(19) Europäisches Patentamt
European Patent Office
Office européen des brevets

(11) EP 3 040 352 A2

(12) EUROPEAN PATENT APPLICATION

(43) Date of publication:
**06.07.2016 Bulletin 2016/27**

(21) Application number: **15202952.6**

(22) Date of filing: **29.12.2015**

(51) Int Cl.:
***C08F 8/42*** *(2006.01)* ***C08F 16/06*** *(2006.01)*
***C08G 75/029*** *(2016.01)* ***C08K 5/54*** *(2006.01)*
***C08L 29/04*** *(2006.01)* ***C09D 129/04*** *(2006.01)*
***C08L 81/06*** *(2006.01)* ***C09D 181/06*** *(2006.01)*
*C08K 5/5419 (2006.01)* *C08J 7/04 (2006.01)*
*B05D 1/02 (2006.01)* *B05D 1/18 (2006.01)*
*B05D 1/28 (2006.01)* *C09D 5/18 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.12.2014 US 201414584843**

(71) Applicant: **Empire Technology Development LLC**
**Wilmington, DE 19808 (US)**

(72) Inventor: **CARLSON, Christopher Alfred**
**Salt Lake City, UT 84110 (US)**

(74) Representative: **Grünecker Patent- und Rechtsanwälte**
**PartG mbB**
**Leopoldstraße 4**
**80802 München (DE)**

# (54) ORGANO-SILANE MODIFIED POLYMERS AND METHODS FOR THEIR PREPARATION AND USE

(57) Polyvinyl alcohol (PVOH) and polyphenyl sulfone (PPSU) organo-silanes that are stable in high temperature, high UV and/or high humidity environments are described. The PVOH and PPSU organo-silanes are useful for a variety of uses, such as anti-corrosion coatings, barrier coatings, high temperature paints, pharmaceutical coatings, pipe coatings, and tank liners. Additionally, methods for the preparation of the PVOH and PPSU organo-silanes are described herein.

EP 3 040 352 A2

## Description

## BACKGROUND

Anti-corrosion coatings, barrier coatings, high temperature paints, pharmaceutical coatings, pipe coatings and tank liners are just a few examples of where polymer coatings are used. Facilities often use polymer coatings to protect exposed metal piping or a product with an exposed metal finish due to concerns around corrosion. Polymer coatings are versatile and easy to apply with excellent properties, with some notable exceptions, such as in environments with high temperature, high UV and/or high humidity. There still exist needs for polymer coatings that are easy to apply and exhibit excellent stability profiles against high temperature, intense UV, high humidity conditions or combinations thereof.

## SUMMARY

Various embodiments are directed to organo-silane modified polymers that may include a reaction product of at least one silane and at least one polyvinyl alcohol. In an embodiment, organo-silane modified polymers may include a reaction product of at least one silane and at least one polyphenylsulfone.

Presently disclosed are methods of preparing an organo-silane modified polymer. The methods may include contacting at least one silane and at least one polyvinyl alcohol. In some embodiments, methods of preparing an organo-silane modified polymer may include contacting at least one silane and at least one polyphenylsulfone.

In an embodiment, methods of coating an article may include contacting the article with an organo-silane modified polymer, wherein the organo-silane modified polymer may include at least one silane and at least one polyvinyl alcohol. In an embodiment, methods of coating an article may include contacting the article with an organo-silane modified polymer, wherein the organo-silane modified polymer may include at least one silane and at least one polyphenylsulfone.

## DETAILED DESCRIPTION

Polyvinyl alcohol (PVOH) and polyphenyl sulfone (PPSU) organo-silanes that are stable in high temperature, high UV and/or high humidity environments are described. The PVOH and PPSU organo-silanes are useful, among other things, as anti-corrosion coatings, barrier coatings, high temperature paints, pharmaceutical coatings, pipe coatings and tank liners. Additionally, methods for the preparation of the PVOH and PPSU organo-silanes are provided.

PVOH and PPSU organo-silanes are provided that are easy to apply with excellent coating properties and are stable in high temperature, high UV, and/or high humidity environments. Further embodiments describe methods for preparing PVOH and PPSU organo-silanes that are easy to apply with excellent coating properties and are stable in high temperature, high UV, and/or high humidity environments.

The term "organo-silane" as used herein alone or as part of another term, refers to an organic compound containing one or more carbon-silicon bonds.

The term "polyvinyl alcohol" as used herein alone or as part of another term, refers to a polymeric material consisting of repeating monomers having the structural formula of:

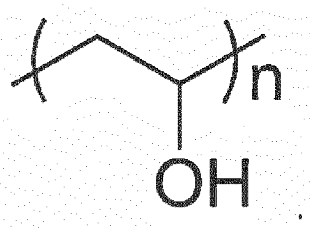

wherein,

n is an integer from about 200 to about 5,000.

The term "polyphenyl sulfone" as used herein alone or as part of another term refers to a polymeric material consisting of repeating monomers having the structural formula of:

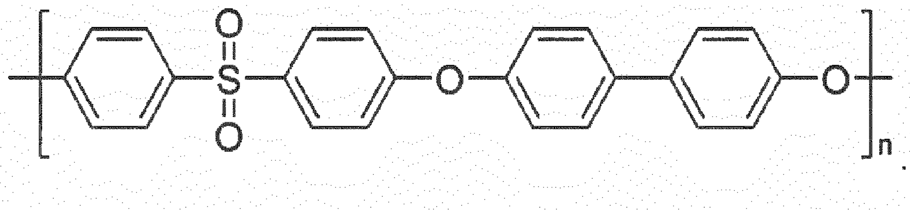

wherein,

n is an integer from about 200 to about 5,000.

The term "substantially" as used herein refers to a numerical range of about 90% to about 100%, such as, for example a composition that is substantially stable at elevated temperature is about 90% to 100% as stable as it was at ambient temperature.

The PVOH organo-silanes described herein can provide an ambient temperature cure coating that is a waterproof gas-barrier. Further, the PPSU organo-silanes can provide a heat resistant coating that may withstand temperatures up to at least about 900°F (482 °C) without deteriorating.

The term "ambient" as used herein refers to the surrounding area or environment. If not indicated to the contrary, the term "ambient" refers to room temperature, i.e. 25°C.

In some embodiments, an organo-silane modified polymer may be a reaction product of at least one silane and at least one polyvinyl alcohol. The organo-silane modified polymer may be a PVOH organo-silane. The reaction product may be according to Formula I:

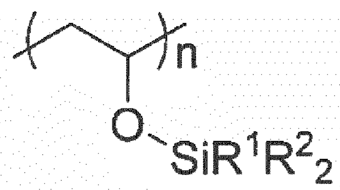

I

wherein,

$R^1$ is : $C_{1-6}$ alkyl, $C_{5-10}$ aryl, $C(O)$-$C_{1-6}$ alkyl or $C_{3-10}C(O)$-$C_{1-6}$alkyl;
$R^2$ is: $C_{1-6}$ alkoxy or $C(O)$-$C_{1-6}$ alkoxy; and
n is an integer from about 200 to about 5,000.

In certain embodiments of the PVOH organo-silanes, $R^1$ may be methyl, ethyl, aceto, phenyl or glycidopropyl. In certain embodiments of the PVOH organo-silanes, $R^2$ may be methoxy, ethoxy or acetoxy.

In some embodiments, the silane (Si-$R^1R^2{}_2$) may be methyl trimethoxysilane, ethyl triethoxysilane, aceto triacetoxysilane, phenyl trimethoxysilane, phenyl triethoxysilane, phenyl triacetoxysilane, phenyl trimethoxysilane or glycidopropyl trimethoxysilane. In some embodiments, the silane may be methyl trimethoxysilane. In some embodiments, the organo-silane modified polymer may be a dehydration product of methyl trimethoxysilane and polyvinyl alcohol.

In some embodiments, the polyvinyl alcohol may be at least about 1% hydrolyzed, about 5% hydrolyzed, about 10% hydrolyzed, about 20% hydrolyzed, about 30% hydrolyzed, about 40% hydrolyzed, about 50% hydrolyzed, about 60% hydrolyzed, about 70% hydrolyzed, about 80% hydrolyzed, about 90% hydrolyzed, about 98% hydrolyzed, about 100% hydrolyzed or a range of values between any of these values (including endpoints). In some embodiments, the polyvinyl alcohol may be at least 98% hydrolyzed. In other embodiments, the polyvinyl alcohol may be at least 1 % hydrolyzed.

In some embodiments, the organo-silane modified polymer may be substantially water resistant. In other embodiments, the organo-silane modified polymer may be hydrophobic. In further embodiments, the organo-silane modified polymer may be waterproof.

The organo-silane modified polymer may be substantially stable at or above a temperature of about 300 °F

(149°C), about 400 °F (204°C), about 500 °F (260 °C), about 600 °F (316 °C) about 700 °F (371 °C), about 800 °F (427 °C), or a range between any of these values (including endpoints). In some embodiments, the organo-silane modified polymer may be substantially stable at a temperature of about 600 °F (316 °C).

In some embodiments, at least one pigmenting agent may be added to the organo-silane modified polymer. The at least one pigmenting agent may be, for example, polytetrafluoroethylene, ethylene tetrafluoroethylene, an inorganic high temperature pigment, a mineral, molybdenum disulfide, nano-graphene, nano-vermiculite, a fine metallic pigment, an organic pigment, an aerogel, glass, an inorganic pigment, or combinations thereof.

In some embodiments, the organo-silane modified polymer may be configured to cure at ambient temperature. The organo-silane modified polymer may be configured to cure at ambient temperature in about 10 seconds to about 60 seconds, about 15 seconds to about 45 seconds, about 15 seconds to about 30 seconds, or a range between any of these values (including endpoints). In some embodiments, the organo-silane modified polymer may be configured to cure at ambient temperature in about 15 seconds to about 30 seconds. In other embodiments, the organo-silane modified polymer may be configured to cure by heating. The organo-silane modified polymer may be configured to cure by heating at a temperature of about 100 °F (38 °C) to about 400 °F (204 °C), 100 °F (38 °C) to about 300 °F (149 °C), about 200 °F (93 °C) to about 300 °F (149°C), 200 °F (93 °C) to about 250 °F (121 °C), or a range between any of these values (including endpoints). In some embodiments, the organo-silane modified polymer may be configured to cure by heating at a temperature of about 200 °F (93 °C) to about 300 °F (149°C). In some embodiments, the organo-silane modified polymer may be configured to cure by heating at a temperature of about 200 °F (93 °C) to about 300 °F (149 °C) for about 10 minutes to about 80 minutes. In other embodiments, the organo-silane modified polymer may be configured to cure by heating at a temperature of about 200 °F (93 °C) to about 300 °F (149 °C) for about 20 minutes to about 60 minutes. In further embodiments, the organo-silane modified polymer may be configured to cure by heating at a temperature of about 200 °F (93 °C) to about 300 °F (149 °C) for about 20 minutes to about 40 minutes.

Some embodiments may provide methods for preparing an organo-silane modified polymer. The method may include contacting at least one silane and at least one polyvinyl alcohol. In some embodiments, the organo-silane modified polymer may be a PVOH organo-silane. The method may yield a reaction product according to Formula I:

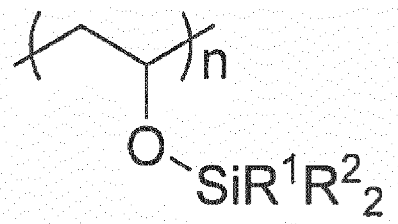

I

wherein,

$R^1$ is : $C_{1-6}$ alkyl, $C_{5-10}$ aryl, C(O)-$C_{1-6}$alkyl or $C_{3-10}$-C(O)-$C_{1-6}$alkyl;
$R^2$ is : $C_{1-6}$ alkoxy or C(O)-$C_{1-6}$ alkoxy; and
n is an integer from about 200 to about 5,000.

In certain embodiments of the PVOH organo-silanes, $R^1$ may be methyl, ethyl, aceto, phenyl or glycidopropyl. In certain embodiments of the PVOH organo-silanes, $R^2$ may be methoxy, ethoxy or acetoxy.

In some embodiments, the silane may be methyl trimethoxysilane, ethyl triethoxysilane, aceto triacetoxysilane, phenyl trimethoxysilane, phenyl triethoxysilane, phenyl triacetoxysilane or glycidopropyl trimethoxysilane. The silane may be methyl trimethoxysilane.

In some embodiments, wherein prior to contacting the silane and the polymer, the polyvinyl alcohol may be hydrolyzed. The polyvinyl alcohol may be at least about 1 % hydrolyzed, about 5 % hydrolyzed, about 10% hydrolyzed, about 20 % hydrolyzed, about 30 % hydrolyzed, about 40 % hydrolyzed, about 50 % hydrolyzed, about 60 % hydrolyzed, about 70 % hydrolyzed, about 80 % hydrolyzed, about 90 % hydrolyzed, about 98 % hydrolyzed, about 100 % hydrolyzed or a range between any of these values (including endpoints). In other embodiments, wherein prior to contacting the silane and the polymer the polyvinyl alcohol may be hydrolyzed to yield a polyvinyl alcohol that may be at least 1 % hydrolyzed. In some embodiments, wherein prior to contacting the silane and the polymer, the polyvinyl alcohol may be hydrolyzed to yield a polyvinyl alcohol that may be at least 98% hydrolyzed.

In some embodiments, the silane and the polyvinyl alcohol may be present at a ratio of about 5:95 to about 50:50 by weight. In other embodiments, the silane and the polyvinyl alcohol may be present at a ratio of about 5 % by

weight of the silane to about 95 % by weight of the polyvinyl alcohol, about 10 % by weight of the silane to about 90 % by weight of the polyvinyl alcohol, about 20 % by weight of the silane to about 80 % by weight of the polyvinyl alcohol, about 30 % by weight of the silane to about 70 % by weight of the polyvinyl alcohol, about 40 % by weight of the silane to about 60 % by weight of the polyvinyl alcohol, about 50 % by weight of the silane to about 50 % by weight of the polyvinyl alcohol, about 60 % by weight of the silane to about 40 % by weight of the polyvinyl alcohol, about 70 % by weight of the silane to about 30 % by weight of the polyvinyl alcohol, about 80 % by weight of the silane to about 20 % by weight of the polyvinyl alcohol, about 90 % by weight of the silane to about 10 % by weight of the polyvinyl alcohol, or a range between any of these values (including endpoints). In further embodiments, the silane and the polyvinyl alcohol may be present at a ratio of about 50 % by weight of the silane to about 50 % by weight of the polyvinyl alcohol.

The polyvinyl alcohol may be dissolved in at least one solvent to form a mixture before contacting the silane and the polyvinyl alcohol. The solvent may be, for example, an alcohol, such as, but not limited to methanol, ethanol, isopropanol, isobutanol, or cyclohexanol; an aliphatic, such as, but not limited to hexane, cyclohexane, heptane, or mineral spirits; an aromatic, such as, but not limited to toluene or xylene; an ester, such as, but not limited to methyl acetate, ethyl acetate, isopropyl acetate, or ethyl propionate; a ketone, such as, but not limited to acetone, methyl ethyl ketone, methyl isobutyl ketone, or cyclohexanone; or combinations thereof. In some embodiments, the solvent may further include water. In some embodiments, the water may be distillled water, purified water, deionized water, or combinations thereof. In other embodiments the water may be distilled water or purified water.

In some embodiments, the mixture of the polyvinyl alcohol and the solvent may further include diluting the mixture with an alcohol or polyol. The mixture of the polyvinyl alcohol and the solvent may be diluted before contacting the silane and the polyvinyl alcohol. In other embodiments, the mixture of the polyvinyl alcohol and the solvent may be diluted after contacting the silane and the polyvinyl alcohol.

In some embodiments, the dissolving of the polyvinyl alcohol and the solvent may include additional steps. In some embodiments, the polyvinyl alcohol and the solvent may be heated while dissolving. The polyvinyl alcohol and the solvent may be heated, for example, at a temperature of about 10 °C, about 20 °C, about 30 °C, about 40 °C, about 50 °C, about 60 °C, about 70 °C, about 80 °C, about 90 °C, about 100 °C, about 125 °C, about 150 °C, about 200 °C, about 250 °C, or a range between any of these values (including endpoints). In some embodiments, the polyvinyl alcohol and the solvent may be stirred while dissolving.

In some embodiments, the silane may be diluted with a diluent. The silane may be diluted before contacting the silane and the polyvinyl alcohol. In other embodiments, the silane may be diluted after contacting the silane and the polyvinyl alcohol. The diluent may be methanol, ethanol, isopropanol, propylene glycol, ethylene glycol, or combinations thereof.

The silane and the polyvinyl alcohol may be contacted with an acid after contacting the silane and the polyvinyl alcohol. The silane and the polyvinyl alcohol may be contacted with an acid before contacting the silane and the polyvinyl alcohol. The acid may be, for example, glacial acetic acid, citric acid, phosphoric acid, hydrochloric acid, or combinations thereof.

In some embodiments, at least one pigmenting agent may be added to the organo-silane modified polymer. The at least one pigmenting agent may be, for example, polytetrafluoroethylene, ethylene tetrafluoroethylene, an inorganic high temperature pigment, a mineral, molybdenum disulfide, nano-graphene, nano-vermiculite, a fine metallic pigment, an organic pigment, an aerogel, glass, an inorganic pigment, or combinations thereof.

In some embodiments, the organo-silane modified polymer may be cured. In some embodiments, the organo-silane modified polymer may be cured at ambient temperature. The organo-silane modified polymer may be configured to be cured at ambient temperature in about 10 seconds to about 60 seconds, about 15 seconds to about 45 seconds, about 15 seconds to about 30 seconds, or a range between any of these values (including endpoints). In some embodiments, the organo-silane modified polymer may be configured to cure at ambient temperature in about 15 seconds to about 30 seconds. In other embodiments, the organo-silane modified polymer may be configured to cure by heating. The organo-silane modified polymer may be configured to cure by heating at a temperature of about 100 °F (38 °C) to about 400 °F (204 °C), 100 °F (38 °C) to about 300 °F (149 °C), about 200 °F (93 °C) to about 300 °F (149 °C), 200 °F (93 °C) to about 250 °F (121 °C), or a range between any of these values (including endpoints). The organo-silane modified polymer may be configured to cure by heating at a temperature of about 200 °F (93 °C) to about 300 °F (149 °C). In some embodiments, the organo-silane modified polymer may be configured to cure by heating at a temperature of about 200 °F (93 °C) to about 300 °F (149 °C) for about 10 minutes to about 80 minutes. In other embodiments, the organo-silane modified polymer may be configured to cure by heating at a temperature of about 200 IF (93 °C) to about 300 °F (149 °C) for about 20 minutes to about 60 minutes. In further embodiments, the organo-silane modified polymer may be configured to cure by heating at a temperature of about 200 °F (93 °C) to about 300 °F (149 °C) for about 20 minutes to about 40 minutes.

In some embodiments, the organo-silane modified polymer may be substantially water resistant. In other embodiments, the organo-silane modified polymer may be hydrophobic. In further embodiments, the organo-silane modified polymer may be waterproof.

The organo-silane modified polymer may be substantially stable at a temperature of about 300 °F (149 °C), about 400 °F (204 °C), about 500 °F (260 °C), about 600 °F (316 °C) about 700 °F (371 °C), about 800 °F (427 °C), or a range between any of these values (including endpoints). In some embodiments, the organo-silane modified polymer may be substantially stable at a temperature of about 600 °F (316 °C).

Some embodiments may provide methods for coating an article such as, for example, plastics, stucco, metals, wood, laminates, concrete, ceramics, non-ferrous alloys and aluminum. The method may include contacting the article with an organo-silane modified polymer. The organo-silane modified polymer may be a reaction product of at least one silane and at least one polyvinyl alcohol. In some embodiments, the organo-silane modified polymer may be a PVOH organo-silane. In some embodiments, the reaction product may be according to Formula I:

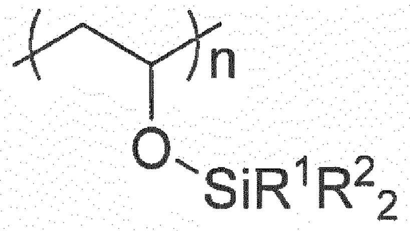

I

wherein,

$R^1$ is : $C_{1-6}$ alkyl, $C_{5-10}$ aryl, $C(O)$-$C_{1-6}$alkyl or $C_{3-10}$-$C(O)$-$C_{1-6}$alkyl;
$R^2$ is : $C_{1-6}$ alkoxy or $C(O)$-$C_{1-6}$ alkoxy; and
n is an integer from about 200 to about 5,000.

In certain embodiments of the PVOH organo-silanes, $R^1$ is methyl, ethyl, aceto, phenyl or glycidopropyl. In certain embodiments of the PVOH organo-silanes, $R^2$ is methoxy, ethoxy or acetoxy.

The organo-silane modified polymer may be contacted with the article by any means well known in the art. In some embodiments, the organo-silane modified polymer may be sprayed onto the article. In some embodiments, the organo-silane modified polymer may be rolled onto the article. In some embodiments, the article may be dipped in the organo-silane modified polymer.

Specifically, the PVOH organo-silane modified polymers as prepared herein were applied to a polyethylene teraphthalate sheet by brush and/or roller application.

Additionally, the method may include contacting the article with a mixture of at least one silane and at least one polyvinyl alcohol and allowing the at least one silane and at least polyvinyl alcohol to react on the article to form an organo-silane modified polymer reaction product.

In some embodiments, an organo-silane modified polymer may be a reaction product of at least one silane and at least one polyphenylsulfone. The organo-silane modified polymer may be a PPSU organo-silane. The reaction product may be according to Formula II:

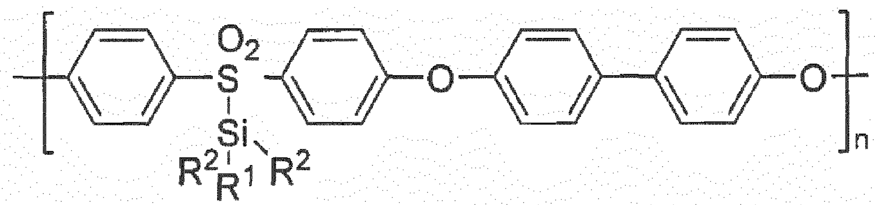

II

wherein,

$R^1$ is : $C_{1-6}$ alkyl, $C_{5-10}$ aryl, $C(O)$-$C_{1-6}$alkyl or $C_{3-10}$-$C(O)$-$C_{1-6}$alkyl;
$R^2$ is : $C_{1-6}$ alkoxy or $C(O)$-$C_{1-6}$ alkoxy; and
n is an integer from about 200 to about 5,000.

In certain embodiments of the PPSU organo-silanes $R^1$ may be methyl, ethyl, aceto, phenyl or glycidopropyl. In certain embodiments of the PPSU organo-silanes $R^2$ may be methoxy, ethoxy or acetoxy.

In some embodiments, the silane may be phenyl trimethoxysilane, methyl trimethoxysilane, ethyl triethoxysilane, aceto triacetoxysilane, phenyl trimethoxysilane, phenyl triethoxysilane, phenyl triacetoxysilane, glycidopropyl trimethoxysilane, or combinations thereof. In other embodiments, the silane may be phenyl trimethoxysilane. In some embodiments, the organo-silane modified polymer may be a dehydration product of phenyl trimethoxysilane and polyphenylsulfone.

In some embodiments, the organo-silane modified polymer may be substantially water resistant. In other embodiments, the organo-silane modified polymer may be hydrophobic. In further embodiments, the organo-silane modified polymer may be waterproof.

The organo-silane modified polymer may be substantially stable at a temperature of about 300 °F (149 °C), about 400 °F (204 °C), about 500 °F (260 °C), about 600 °F (316 °C) about 700 °F (371 °C), about 800 °F (427 °C), about 900 °F (482 °C), about 1000 °F (538 °C), about 1100 °F (593 °C), or a range between any of these values (including endpoints). In some embodiments, the organo-silane modified polymer may be substantially stable at a temperature of about 900 °F (482 °C).

In some embodiments, at least one pigmenting agent may be added to the organo-silane modified polymer. The at least one pigmenting agent may be, for example, polytetrafluoroethylene, ethylene tetrafluoroethylene, an inorganic high temperature pigment, a mineral, molybdenum disulfide, nano-graphene, nano-vermiculite, a fine metallic pigment, an organic pigment, an aerogel, glass, an inorganic pigment, or combinations thereof.

In some embodiments, the organo-silane modified polymer may be configured to cure by heating. The organo-silane modified polymer may be configured to cure by heating at a temperature of about 200 °F (93 °C) to about 600 °F (316 °C), 300 °F (149 °C) to about 600 °F

(316 °C), about 400 °F (204 °C) to about 600 °F (316 °C), about 400 °F (204 °C) to about 550 °F (288 °C), about 425 °F (218 °C) to about 525 °F (274 °C) or a range between any of these values (including endpoints). In some embodiments, the organo-silane modified polymer may be configured to cure by heating at a temperature of about 425 °F (218 °C) to about 525 °F (274 °C). In some embodiments, the organo-silane modified polymer may be configured to cure by heating at a temperature of about 425 °F (218 °C) to about 525 °F (274 °C) for about 10 minutes to about 60 minutes. In some embodiments, the organo-silane modified polymer may be configured to cure by heating at a temperature of about 425 °F (218 °C) to about 525 °F (274 °C) for about 10 minutes to about 50 minutes. In some embodiments, the organo-silane modified polymer may be configured to cure by heating at a temperature of about 425 °F (218°C) to about 525 °F (274 °C) for about 10 minutes to about 40 minutes. In some embodiments, the organo-silane modified polymer may be configured to cure by heating at a temperature of about 425 °F (218 °C) to about 525 °F (274 °C) for about 15 minutes to about 30 minutes.

Some embodiments may provide methods for preparing an organo-silane modified polymer. The method may include contacting at least one silane and at least one polyphenylsulfone. In some embodiments, the organo-silane modified polymer may be a PPSU organo-silane. The method may yield a reaction product according to Formula II:

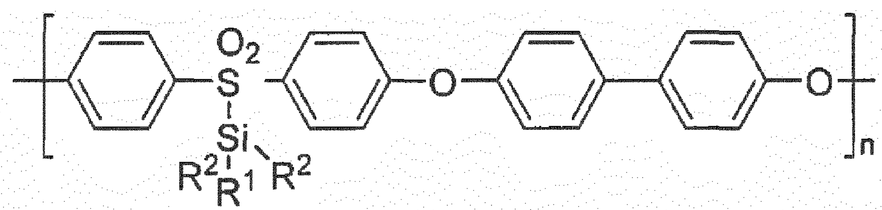

II

wherein,

$R^1$ is : $C_{1-6}$ alkyl, $C_{5-10}$ aryl, $C(O)$-$C_{1-6}$ alkyl or $C_{3-10}$-$C(O)$-$C_{1-6}$alkyl;
$R^2$ is or: $C_{1-6}$ alkoxy and $C(O)$-$C_{1-6}$ alkoxy; and
n is an integer from about 200 to about 5,000.

In certain embodiments of the PPSU organo-silanes $R^1$ may be methyl, ethyl, aceto, phenyl or glycidopropyl. In certain embodiments of the PPSU organo-silanes $R^2$ may be methoxy, ethoxy or acetoxy.

In some embodiments, the silane may be phenyl trimethoxysilane, methyl trimethoxysilane, ethyl triethoxysilane, aceto triacetoxysilane, phenyl triethoxysilane, phenyl triacetoxysilane, glycidopropyl trimethoxysilane, or combinations

thereof. In some embodiments, the silane may be phenyl trimethoxysilane.

The silane and the polyphenylsulfone may be present at a ratio of about 5 % by weight of the silane to about 10 % by weight of the polyphenylsulfone, about 10 % by weight of the silane to about 10 % by weight of the polyphenylsulfone, about 15 % by weight of the silane to about 10 % by weight of the polyphenylsulfone, about 20 % by weight of the silane to about 10 % by weight of the polyphenylsulfone, about 20 % by weight of the silane to about 5 % by weight of the polyphenylsulfone, about 20 % by weight of the silane to about 10 % by weight of the polyphenylsulfone, about 20 % by weight of the silane to about 15 % by weight of the polyphenylsulfone, about 20 % by weight of the silane to about 20 % by weight of the polyphenylsulfone, or a range between any of these values (including endpoints). In some embodiments, the silane and the polyphenylsulfone may be present at a ratio of about 20 % by weight of the silane to about 10 % by weight of the polyphenylsulfone.

In some embodiments, the polyphenylsulfone may be in powder form prior to contacting the silane and the polyphenylsulfone, In some embodiments, the polyphenylsulfone may be in pellet form prior to contacting the silane and the polyphenylsulfone. In some embodiments, the polyphenylsulfone may be a liquid prior to contacting the silane and the polyphenylsulfone.

The polyphenylsulfone may be dissolved in at least one solvent to form a mixture before contacting the silane and the polyphenylsulfone. The solvent may be nitromethyl pyrrolidone, gammabutyro lactone, xylene, toluene, or combinations thereof.

In some embodiments, the mixture of the polyphenylsulfone and the solvent may further include diluting the mixture. The mixture of the polyphenylsulfone and the solvent may be diluted before contacting the silane and the polyphenylsulfone. In other embodiments, the mixture of the polyphenylsulfone and the solvent may be diluted after contacting the silane and the polyvinyl alcohol. In some embodiments, the mixture of the polyphenylsulfone and the solvent may be diluted, where the polyphenylsulfone may be about 5 % by weight to about 95 % by weight in solution; about 5 % by weight to about 75 % by weight in solution, about 5 % by weight to about 50 % by weight in solution, about 10 % by weight to about 50 % by weight in solution, about 10 % by weight to about 25 % by weight in solution, or a range between any of these values (including endpoints). In some embodiments, the mixture of the polyphenylsulfone and the solvent may be diluted, where the polyphenylsulfone may be about 10 % by weight to about 25 % by weight in solution.

In some embodiments, the dissolving of the polyphenylsulfone and the solvent may include additional steps. In some embodiments, the polyphenylsulfone and the solvent may be heated while dissolving. The polyphenylsulfone and the solvent may be heated at a temperature of about 10 °C, about 20 °C, about 30 °C, about 40 °C, about 50 °C, about 60 °C, about 70 °C, about 80 °C, about 90 °C, about 100 °C, about 125 °C, about 150 °C, about 200 °C, about 250 °C, or a range between any of these values (including endpoints). In some embodiments, the polyphenylsulfone and the solvent may be stirred while dissolving.

The pH of the mixture of the polyphenylsulfone and the solvent may be adjusted with an acid before contacting the silane and the polyphenylsulfone. The acid may be, for example, glacial acetic acid, citric acid, phosphoric acid, hydrochloric acid, or combinations thereof. In some embodiments, the acid may be glacial acetic acid.

In some embodiments, at least one pigmenting agent may be added to the organo-silane modified polymer. The at least one pigmenting agent may be, for example, polytetrafluoroethylene, ethylene tetrafluoroethylene, an inorganic high temperature pigment, a mineral, molybdenum disulfide, nano-graphene, nano-vermiculite, a fine metallic pigment, an organic pigment, an aerogel, glass, an inorganic pigment, or combinations thereof.

In some embodiments, the organo-silane modified polymer may be cured. In some embodiments, the organo-silane modified polymer may be configured to cure by heating. The organo-silane modified polymer may be configured to cure by heating at a temperature of 200 °F (93 °C) to about 600 °F (316 °C), 300 °F (149 °C) to about 600 °F (316 °C), about 400 °F (204 °C) to about 600 °F (316 °C), about 400 °F (204 °C) to about 550 °F (288 °C), about 425 °F (218 °C) to about 525 °F (274 °C), or a range between any of these values (including endpoints). In some embodiments, the organo-silane modified polymer may be configured to cure by heating at a temperature of about 425 °F (218 °C) to about 525 °F (274 °C). In some embodiments, the organo-silane modified polymer may be configured to cure by heating at a temperature of about 425 °F (218 °C) to about 525 °F (274 °C) for about 10 minutes to about 60 minutes. In some embodiments, the organo-silane modified polymer may be configured to cure by heating at a temperature of about 425 °F (218 °C) to about 525 °F (274 °C) for about 10 minutes to about 50 minutes. In some embodiments, the organo-silane modified polymer may be configured to cure by heating at a temperature of about 425 °F (218 °C) to about 525 °F (274 °C) for about 10 minutes to about 40 minutes. In some embodiments, the organo-silane modified polymer may be configured to cure by heating at a temperature of about 425 °F (218 °C) to about 525 °F (274 °C) for about 15 minutes to about 30 minutes.

In some embodiments, the organo-silane modified polymer may be substantially water resistant. In other embodiments, the organo-silane modified polymer may be hydrophobic. In further embodiments, the organo-silane modified polymer may be waterproof.

The organo-silane modified polymer may be substantially stable at a temperature of about 300 °F (149 °C),

about 400 °F (204 °C), about 500 °F (260 °C), about 600 °F (316 °C) about 700 °F (371 °C), about 800 °F (427 °C), about 900 °F (482 °C), about 1000 °F (538 °C), about 1100 °F (593 °C), or a range between any of these values (including endpoints). In some embodiments, the organo-silane modified polymer may be substantially stable at a temperature of about 900 °F (482 °C).

Some embodiments may provide methods for coating an article such as, for example, concrete, steel, plastic, non-ferrous alloys, ceramics and wood. The method may include contacting the article with an organo-silane modified polymer. The organo-silane modified polymer may be a reaction product of at least one silane and at least one polyphenylsulfone. In some embodiments, the organo-silane modified polymer may be a PPSU organo-silane. In some embodiments, the reaction product may be according to Formula II:

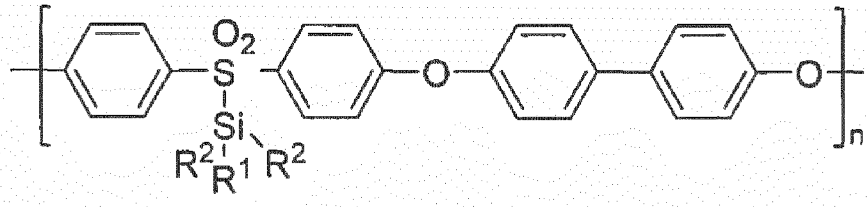

II

wherein,

$R^1$ is: $C_{1-6}$ alkyl, $C_{5-10}$ aryl, C(O)-$C_{1-6}$alkyl or $C_{3-10}$-C(O)-$C_{1-6}$alkyl;
$R^2$ is : $C_{1-6}$ alkoxy or C(O)-$C_{1-6}$ alkoxy; and
n is an integer from about 200 to about 5,000.

In certain embodiments of the PPSU organo-silanes $R^1$ may be methyl, ethyl, aceto, phenyl or glycidopropyl. In certain embodiments of the PPSU organo-silanes $R^2$ may be methoxy, ethoxy or acetoxy.

The organo-silane modified polymer may be contacted with the article by any means well known in the art. In some embodiments, the organo-silane modified polymer may be sprayed onto the article. In some embodiments, the organo-silane modified polymer may be rolled onto the article. In some embodiments, the article may be dipped in the organo-silane modified polymer.

Specifically, the PPSU organo-silane modified polymers as prepared herein were applied to 6061 cast aluminum by spray application using standard pneumatic spray equipment.

Additionally, the method may include contacting the article with a mixture of at least one silane and at least one polyphenylsulfone and allowing the at least one silane and at least polyphenylsulfone to react on the article to form an organo-silane modified polymer reaction product.

The polymerization degree for the polymers disclosed for this invention generally refers to the number-average polymerization degree. The number-average polymerization degree is determined using gel permeation chromatography (GPC). GPC is well known in the art. If not indicated to the contrary, tetrahydrofuran is used as a solvent, polystyrene is used as a standard, and the employed column is commercially available from Waters under the trade name "Styragel® HR", using a styrene/divinylbenzene copolymer as a packaging material.

The polymerization degree is defined as the number of monomeric units in a moacromolecule or polymer. For a homopolymer, the number-average polymerization degree is given by the following formula:

$$PD_n = M_n / M_0$$

Wherein $PD_n$ is the polymerization degree, $M_n$ is the number-average molecular weight and $M_0$ is the molecular weight of the monomer unit.

PREPARATION OF ORGANO-SILANES

The organo-silanes may be prepared using the methods described below, together with synthetic methods known in the art of polymer chemistry, or variations thereon as appreciated by those skilled in the art.

The organo-silanes of Formulas I and II may be prepared using the reactions and techniques described in this section. The reactions may be performed in solvents appropriate to the reagents and materials employed and are suitable for the transformations being effected. Also, in the description of the synthetic methods described below, it is to be understood that all proposed reaction conditions, including solvent, reaction atmosphere, reaction temperature, duration of the experiment and workup procedures, are chosen to be the conditions standard for that reaction, which should be readily recognized by one skilled in the art. One skilled in the art of polymer chemistry understands that the functionality present on various portions of the edict molecule must be compatible with the reagents and reactions proposed. Some organo-silanes of Formulas I and II falling into a given class may not be compatible with some of the reaction conditions required in some of the methods described. Such restrictions to the substituents, which are compatible with the reaction conditions, will be readily apparent to one skilled in the art and alternate methods can be used.

The PVOH organo-silanes of formula I may be prepared by the procedure depicted in Scheme 1 that depicts contacting PVOH with an appropriate silane in the presence of an acid catalyst. As an example, this Scheme 1 can be performed in an aqueous system. The reaction mixture is stirred until visibly homogenous and outgassing has ceased.

SCHEME 1

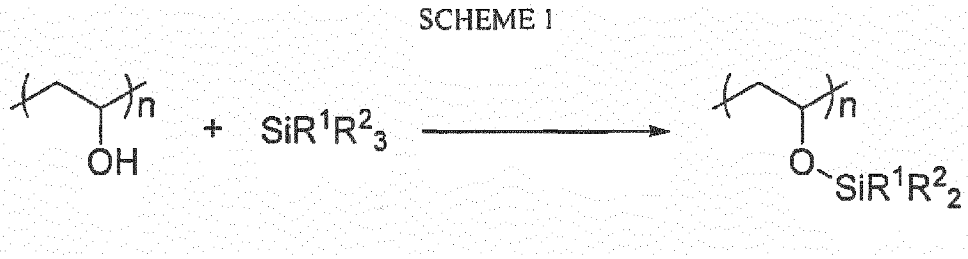

The PPSU organo-silanes of formula II may be prepared by the procedure depicted in Scheme 2 that depicts contacting a solution of PPSU in a suitable solvent with an appropriate silane. The reaction mixture is stirred until clear and homogenous.

SCHEME 2

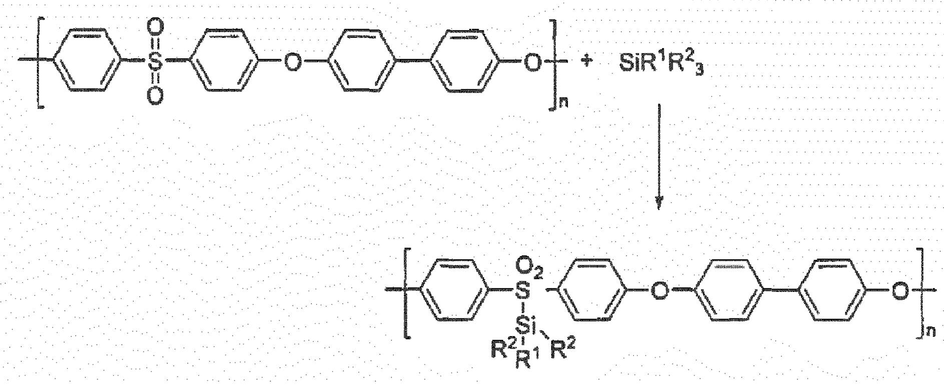

The PVOH-methyl trimethoxysilane coating is waterproof, flexible, resistant to high temperature, adhesive to surfaces, corrosion resistant and cures at ambient temperature. Additionally, it provides a gas-barrier in challenging environments. Further, the present PVOH-methyl trimethoxysilane material may be fully submersed in salt water for days without negative effect.

The PPSU-phenyl trimethoxysilane coating is a versatile polymer coating/adhesive that can withstand temperatures up to 900°F. A variety of pigments may be incorporated into the PPSU-phenyl trimethoxysilane material such as, for example, PTFE, ETFE, inorganic high temperature pigments, minerals and molybdenum disulfide.

## EXAMPLES

Example 1: Preparation of PVOH-methyl dimethoxysilylether:

A solution of 5% PVOH (18 g, 99% hydrolyzed) was added to a beaker with a magnetic stirring bar and placed

on a magnetic stirrer. Methyl trimethoxysilane (17 g) was added slowly to the solution of PVOH with stirring along with glacial acetic acid (0.175 g) to maintain the pH between 3 and 4.. The reaction mixture was stirred for 30 minutes until homogenous and outgassing ceased. The reaction product has a six (6) hour pot life.

Example 2: Preparation of PPSU-phenyl dimethoxysilylether:

Nitro methylpyrrolidinone (25 g) was placed in a beaker equipped with a magnetic stirring bar and placed on a magnetic stirrer. The nitro methylpyrrolidinone was heated with stirring at 150 °F (66 °C) and PPSU (5g) was added and stirred with heating until dissolved. After cooling to ambient temperature, the phenyl trimethoxysilane (3g) was added slowly with stirring. The reaction mixture was stirred 30 minutes until clear and homogenous.

Example 3: Spray Coating with PVOH or PPSU:

The PPSU organo-silane as prepared in Example 2 was applied to 6061 cast aluminum by spray application using standard pneumatic spray equipment.

Example 4: Wipe Coating with PVOH:

The PVOH organo-silane as prepared in Example 1 was applied to a polyethylene teraphthalate sheet by brush.

Example 5: Dip Coating with PVOH or PPSU:

The PVOH or PPSU organo-silane as prepared in Example 1 or 2 may be applied to a surface by dip application known to one of skill in the art.

Example 6: Comparison of PVOH and EVOH/PVDC/PET composite:

The PVOH ograno-silane as prepared in Example 1 when applied to a surface as a laminate comprising a 50 mil layer of polyethylene teraphalate and a 10 micron layer of the PVOH organo-silane provides a waterproof gas-barrier superior to the 13 layer ethylvinyl alcohol (EVOH, polyvinyl dichloride (PVDC) and polyethylene teraphalate (PET) laminate fine marketed by AMPAC®.

Example 7: Comparison of PPSU, CERAKOTE®, and HPC®:

The PPSU organo-silane as prepared in Example when applied to a surface provides a temperature barrier to 900 °F (482 °C) with no exceptions and is safe to manufacture. Conversely, CERAKOTE® may be used as a high-temperature paint; however, the manufacture, application and curing of this product gives off toxic fumes that are highly regulated and/or illegal in some states. Further, HPC® guarantees 900 °F (482 °C) only under certain conditions and furthermore its toxic properties are suspect.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds, compositions or biological systems, which can, of course, vary. It is also to be understood that the terminology used herein is for the purpose of describing particular embodiments only, and is not intended to be limiting.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (for example, bodies of the appended claims) are generally intended as "open" terms (for example, the term "including" should be interpreted as "including but not limited to," the term "having" should be interpreted as "having at least," the term "includes" should be interpreted as "includes but is not limited to"). While various compositions, methods, and devices are described in terms of "comprising" various components or steps (interpreted as meaning "including, but not limited to"), the compositions, methods, and devices can also "consist essentially of" or "consist of" the various components and steps, and such terminology should be interpreted as defining essentially closed-member groups. It

will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (for example, "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (for example), the bare recitation of "two recitations," without other modifiers, means at least two recitations, or two or more recitations). Furthermore, in those instances where a convention analogous to "at least one of A, B, and C, et cetera" is used, in general such a construction is intended in the sense one having skill in the art would understand the convention (for example, " a system having at least one of A, B, and C" would include but not be limited to systems that have A alone, B alone, C alone, A and B together, A and C together, B and C together, and/or A, B, and C together, et cetera). In those instances where a convention analogous to "at least one of A, B, or C, et cetera" is used, in general such a construction is intended in the sense one having skill in the art would understand the convention (for example, " a system having at least one of A, B, or C" would include but not be limited to systems that have A alone, B alone, C alone, A and B together, A and C together, B and C together, and/or A, B, and C together, et cetera). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, or the like. As a non-limiting example, each range discussed herein can be readily broken down into a lower third, a middle third, and an upper third. As will also be understood by one skilled in the art all language such as "up to," "at least," and the like include the number recited and refer to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Various of the above-disclosed and other features and functions, or alternatives thereof, may be combined into many other different systems or applications. Various presently unforeseen or unanticipated alternatives, modifications, variations or improvements therein may be subsequently made by those skilled in the art, each of which is also intended to be encompassed by the disclosed embodiments.

## Claims

**1.** An organo-silane modified polymer comprising a reaction product of at least one silane and at least one polyvinyl alcohol.

**2.** The organo-silane modified polymer of claim 1, wherein the silane comprises methyl trimethoxysilane, ethyl triethoxysilane, aceto triacetoxysilane, phenyl trimethoxysilane, phenyl triethoxysilane, phenyl triacetoxysilane, phenyl trimethoxysilane, or glycidopropyl trimethoxysilane.

**3.** The organo-silane modified polymer of claim 1 or 2, wherein the polyvinyl alcohol is at least 1 % hydrolyzed; preferably wherein the polyvinyl alcohol is at least 98% hydrolyzed.

**4.** The organo-silane modified polymer of any one of claims 1 to 3, wherein the organo-silane modified polymer is configured to cure at ambient temperature.

**5.** The organo-silane modified polymer of any one of claims 1 to 4, wherein the organo-silane modified polymer is configured to cure by heating.

**6.** A method of preparing an organo-silane modified polymer, the method comprising contacting at least one silane and at least one polyvinyl alcohol.

**7.** The method of claim 6, wherein the silane comprises methyl trimethoxysilane, ethyl triethoxysilane, aceto triacetoxysilane, phenyl trimethoxysilane, phenyl triethoxysilane, phenyl triacetoxysilane, or glycidopropyl trimethoxysilane.

**8.** The method of claim 6 or 7, wherein the silane and the polyvinyl alcohol are present at a ratio of about 5 % by weight of the silane to about 95 % by weight of the polyvinyl alcohol; and/or
further comprising dissolving the polyvinyl alcohol in at least one solvent to form a mixture before contacting the silane and the polyvinyl alcohol; and/or
further comprising contacting the silane and the polyvinyl alcohol with at least one acid after contacting the silane and the polyvinyl alcohol; and/or
further comprising curing the organo-silane modified polymer.

**9.** An organo-silane modified polymer comprising a reaction product of at least one silane and at least one polyphenylsulfone.

**10.** The organo-silane modified polymer of claim 9, wherein the silane comprises phenyl trimethoxysilane, methyl trimethoxysilane, ethyl triethoxysilane, aceto triacetoxysilane, phenyl trimethoxysilane, phenyl triethoxysilane, phenyl triacetoxysilane or glycidopropyl trimethoxysilane.

**11.** The organo-silane modified polymer of claim 9 or 10, wherein the organo-silane modified polymer is a dehydration product of phenyl trimethoxysilane and polyphenylsulfone.

**12.** A method of preparing an organo-silane modified polymer, the method comprising contacting at least one silane and at least one polyphenylsulfone.

**13.** The method of claim 12, wherein the silane comprises phenyl trimethoxysilane, methyl trimethoxysilane, ethyl triethoxysilane, aceto triacetoxysilane, phenyl triethoxysilane, phenyl triacetoxysilane, or glycidopropyl trimethoxysilane.

**14.** The method of claim 12 or 13, wherein the silane and the polyphenylsulfone are present at a ratio of about 20 % by weight of the silane to about 10 % by weight of the polyphenylsulfone.

**15.** The method of any one of claims 12 to 14, further comprising dissolving the polyphenylsulfone in at least one solvent to form a mixture before contacting the silane and the polyphenylsulfone; and/or
further comprising curing the organo-silane modified polymer.